# EUROPEAN PATENT SPECIFICATION

(11) **EP 2 119 497 B1**
(45) Date of publication and mention of the grant of the patent: **07.03.2012**
(21) Application number: 07860156.4
(22) Date of filing: 26.12.2007
(51) Int. Cl.: B01J 7/02, B01D 1/14, G01N 1/10, B65D 39/04, B65D 51/16

(54) **STOPPER FOR REMOVING VOLATILE SUBSTANCE, VESSEL FOR REMOVING VOLATILE SUBSTANCE, AND APPARATUS FOR REMOVING VOLATILE SUBSTANCE**
STOPFEN ZUM ENTFERNEN EINER FLÜCHTIGEN SUBSTANZ, GEFÄSS ZUM ENTFERNEN EINER FLÜCHTIGEN SUBSTANZ UND VORRICHTUNG ZUM ENTFERNEN EINER FLÜCHTIGEN SUBSTANZ
BOUCHON, RECIPIENT ET APPAREIL PERMETTANT D'ELIMINER UNE SUBSTANCE VOLATILE

(30) Priority: 27.12.2006 JP 2006350964
(43) Date of publication of application: 18.11.2009
(73) Proprietor: Biochromat Co., Ltd., Fujisawa-shi, Kanagawa 251-0053 (JP)
(72) Inventor: OHNUKI, Takashi, Tokyo 140-0005 (JP); NAKAJIMA, Mutsuo, Chofu-shi Tokyo 182-0006 (JP); KINOSHITA, Kazumasa, Fujisawa-shi Kanagawa 251-0053 (JP)
(74) Representative: Höhfeld, Jochen
(86) International application number: PCT/JP2007/074927
(87) International publication number: WO 2008/078765

(56) References cited:
- JP-A- 11 113 559
- JP-A- 63 502 646
- JP-A- 2001 206 397
- JP-U- 60 011 054

## Description

### Field of the Invention

The present invention relates to a stopper according to the preamble of claim 1 for removing a volatile substance, which is used to stir a sample solution and evaporate (vaporize and eliminate) a volatile substance in the sample solution, a vessel such as test tube equipped with the above stopper for evaporating a volatile substance and a device utilizing the above vessel equipped with the above stopper.

### Background of the Invention

As an apparatus for evaporating (vaporizing and removing) a solvent from a sample solution collected in a container such as a test tube, a solvent vaporizer of a type for blowing gas into the container or reducing pressure in the container to vaporize a volatile substance, such as a solvent, and then remove it accompanied with the blown gas has been proposed in recent years (a gas blowing type vaporizer or the vaporizer of pressure reducing type.) The vaporizer of this type has advantages of being able to treat large number of samples at a time compared with evaporation of a solvent using a rotary evaporator. The vaporizer has further advantages of being able to treat in a relatively short period and also applicable to small numbers of samples compared with a conventional centrifugal concentrator.

In the solvent evaporating apparatus of the gas blowing type or pressure reducing type, in order to stir a sample solution vigorously so as to increase a surface area of the solution and thus to accelerate vaporizing, an apparatus equipped with a vessel such as a test tube which is designed to devise method for blowing gas or reducing pressure has been proposed (for example, referring to Patent literatures 1 and 2.) A test tube, described in Patent literature 1, is provided with a gas supply conduit penetrating a lid of the test tube, in which a discharge port of the gas supply conduit is directed to an inner wall of the tube. The gas introduced into the tube proceeds along the inner wall in a spiral pattern to impinge the liquid surface and to stir the solution. A test tube, described in Patent literature 2, is also provided with a flow inlet pore penetrating a lid and directing an inner wall of the tube obliquely.
Patent literature 1: Japanese re-published unexamined application S63-502646.
Patent literature 2: Japanese utility model application S60-11054.

### Summary of Invention

### Problems to be solved by the Invention

Although the methods described in the Patent literatures 1 and 2 allow evaporating of a solvent in a test tube for removing solvent, these methods are insufficient for stirring the solution vigorously and effectively and also for increasing a contact area of the solution with the blowing gas. So, these methods do not necessarily satisfy easy and effective evaporation of the solvent.

An object of the present invention is to provide a stopper for evaporating a volatile substance, which is capable of effective vaporizing and removing of a volatile substance, such as solvent, with a simple way; a vessel for evaporating a volatile substance, which uses the stopper for removing a volatile substance described above; and an apparatus for evaporating a volatile substance, which uses the vessel for removing a volatile substance described above.

### Means of Solving the Problems

In order to achieve the above purpose, the inventors of the present invention carried out an in depth study to accomplish the object. As a result, they have found that this object can be accomplished by using a stopper for evaporating a volatile substances which is provided with a specific groove, and a vessel for removing a volatile substance, which uses the stopper of the present invention.

The present invention has been accomplished based on the above finding and provides a stopper for removing a volatile substance, which closes an opening of a container for removing a volatile substance,
wherein said stopper is formed with a through-pore for exhausting gas containing a volatile substance
said stopper is formed with a gas inlet port at the upper edge for introducing blowing gas into the container and a gas outlet port at the lower edge for contacting the introduced gas with a solvent in the container, and
said stopper is formed with a groove connecting said inlet port to said outlet port at the side surface.

The present invention provides a vessel for evaporating a volatile substance, which is used to vaporize a volatile substance from a sample solution, comprising:
a container storing the solution containing said volatile substance; and
a stopper for evaporating a volatile substance, which closes an opening of said container,
wherein said stopper is formed with a through-pore for exhausting gas containing a volatile substance,
said stopper is formed with a gas inlet port at the upper edge for introducing gas into the container and a gas outlet port at the lower edge for contacting the introduced gas with a solvent in the container, and
said stopper is formed with a groove connecting said inlet port to said outlet port at the side surface.

Furthermore, the present invention provides an apparatus for evaporating a volatile substance, which evaporates a volatile substance from a sample solution, comprising:
one or more vessel for removing a volatile substance, which store said sample solution; and
pressure-reducing means for reducing pressure in said vessel for introducing a blowing gas,
wherein said vessel for evaporating a volatile substance comprises:
   a container collecting the solution containing said volatile substance; and
   a stopper for evaporating a volatile substance, which closes an opening of said container,
   wherein said stopper is formed with a through-pore for exhausting gas containing a volatile substance,
   said stopper is formed with a gas inlet port at the upper edge for introducing gas into the container and a gas outlet port at the lower edge for contacting the introduced gas with a solution in the container, and
   said stopper is formed with a groove connecting said inlet port to said outlet port at the side surface.

The stopper for evaporating a volatile substance of the present invention is used to close an opening of a container for evaporating a volatile substance. The stopper and the container serve a vessel for removing a volatile substance of the present invention.

In the present invention, an angle of said groove to a horizontal surface is preferably 10 to 45°; although not limited. The angle of 10 to 45° allows effective stirring of the solution and thus effective evaporating of the volatile substance. The angle of the groove is more preferably 15 to 25°. The angle of the groove having the above range improves evaporative efficiency of the volatile substance.

A volatile substance which is evaporated using the vessel described above or an apparatus for removing a volatile substance according to the present invention means a solvent used in an organic chemical experiment (organic synthesis and refining); a solid substance having a vapor pressure; and the like.

The solvent includes; although not limited, those having vapor pressure at a certain temperature (room temperature and heating temperature). For example, the solvent include methanol; ethyl acetate; water; ethanol; propanol; butanol; acetone; methyl ethyl ketone; acetonitrile; acetic acid; hexane; diethyl ether; chloroform and methylene chloride and so on.

Furthermore, a solid having a vapor pressure at a specific temperature can be vaporized and removed by using the vessel or apparatus for evaporating a volatile substance according to the present invention. Examples of such solid includes a solid compound which sublimes in a certain temperature range, for example, metal halide such as aluminum trichloride.

A vessel for evaporating a volatile substance of the present invention is a vessel, which is used to vaporize a volatile substance from a sample solution, comprising:
a container storing the solution containing said volatile substance; and
a stopper for evaporating a volatile substance, which closes an opening of said container,
wherein said stopper is formed with a through-pore for exhausting gas containing a volatile substance,
said stopper is formed with a gas inlet port at the upper edge for introducing gas into the container and a gas outlet port at the lower edge for contacting the introduced gas with a solution in the container, and
said stopper is formed with a groove connecting said inlet port to said outlet port at the side surface. The vessel for evaporating a volatile substance of the present invention used the above described stopper for removing a volatile substance of the present invention for closing an opening part of the container.

By using the vessel for evaporating a volatile substance according to the present invention, when the vessel is reduced in pressure, an eternal gas is blown into the vessel at high speed from the gas outlet port through the groove. The blown gas is subjected to a rotating force caused by passing through the groove formed on the stopper and thus spirally rotates along the inner wall of the test tube by centrifugal force. The rotating flow kicks up the sample solution and stirs it by the rotating force. As a result, a surface area (evaporable area of the volatile substance) of the sample solution is increased to promote vaporization of the volatile substance, such as a solvent.

An apparatus for evaporating a volatile substance of the invention is an apparatus, which evaporates a volatile substance from a sample solution, comprising:
one or more vessel for removing a volatile substance, which store said sample solution; and
pressure-reducing means for reducing pressure in said vessel for a removing volatile substance,
wherein said vessel for removing a volatile substance comprises:
   a container storing the solution containing said volatile substance; and
   a stopper for evaporating a volatile substance, which closes an opening part of said container,
   wherein said stopper is formed with a through-pore for exhaustinggas containing a volatile substance,
   said stopper is formed with a gas inlet port at the upper edge for introducing gas into the container and a gas outlet port at the slower edge for contacting the introduced gas with a solution in the container, and
   said stopper is formed with a groove connecting said inlet port to said outlet port at the side surface.

### Effect of the Invention

According to the stopper for evaporating a volatile substance of the present invention, an operation for blowing a gas to the sample solution and another operation for exhausting the vaporized volatile substance forcibly can be carried out in one vessel. Accordingly, even if a hardly removable volatile substance having a high boiling pointcan be evaporated quickly using a vessel of the present invention for removing a volatile substance, which uses the stopper for removing a volatile substance, according to the present invention, compared with a conventional method using the test tube for removing a volatile substance.

In the vessel for evaporating a volatile substance according to the present invention, when the vessel is reduced in pressure by the pressure-reducing means, an eternal gas is blown into vessel for a removing a volatile substance at high speed while rotating through the groove. The blown gas spirally rotates along the inner wall of the vessel by centrifugal force, causing a high-speed rotating flow. The rotating flow gas stirs the sample solution effectively and increases a surface area (evaporable area) of the sample solution. This accelerates vaporization of the volatile substance and evaporates the volatile substance in a relatively short period.

Using the vessel for removing a volatile substance according to the present invention allows vigorous and effective stirring of the test solution and evaporating the volatile substance at low temperature without raising the temperature of the solution significantly. Accordingly, a volatile substance can be evaporated without decompression of the sample compound such as a solute of the solution.

The apparatus for evaporating a volatile substance according to the present invention allows reducing pressure of plural of the vessel for removing a volatile substance using one pressure-reducing means whereby plural of sample solution can be treated at once.

### Detailed Description of Embodiment of the Invention

Hereinafter, preferred embodiments of the present invention will be described in detail with the accompanying drawings as references.

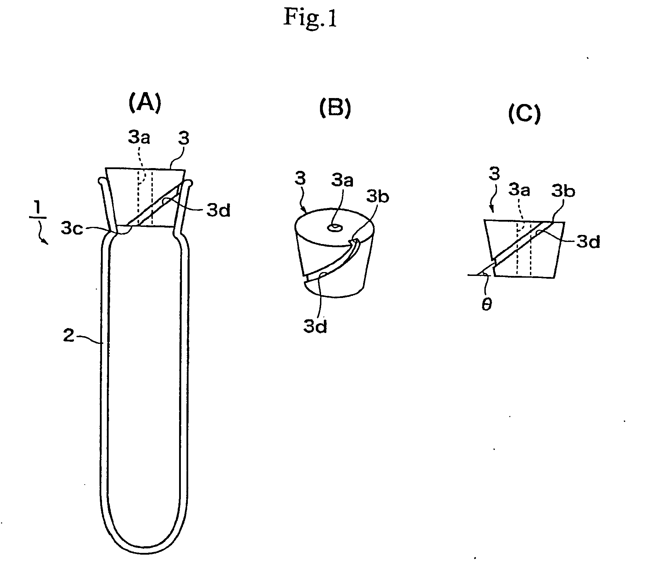

Figs.1 are drawings showing a stopper for evaporating a volatile substance and a vessel for evaporating a volatile substance according to the present invention, Fig.1A is a front view of the vessel for removing a volatile substance; Fig.1B is a perspective view of the stopper for removing a volatile substance (referred to a stopper simply in the present specification) and Fig.1C is a front view of the stopper.

The vessel 1 for removing a volatile substance comprises a container 2 for collecting a sample solution and a stopper 3 for removing a volatile substance, which closes an opening part of the container 2.

The stopper for removing a volatile substance according to the present invention will be described referring to Figs.lB and 1C.

A material for producing the stopper 3 is not limited but preferably includes silicon rubber and the like, for example.. The stopper 3 is formed with a through-pore 3a at the center, through which a vaporized volatile substance is discharged with blowing gas. And, the stopper 2 is formed with a gas inlet port 3b at the upper edge and a gas outlet port 3c at the lower edge. A groove 3d connecting the gas inlet port 3b and the gas outlet port 3c is formed on the side surface of the stopper 3. An angle θ (shown in Fig.1C) of the groove 3d to a horizontal level is preferably 10 to 45°, more preferably 15 to 25°.

A size of the stopper 3 for removing a volatile substance is not limited but is determined suitably depending on the size of the container for removing a volatile substance. Although the stopper shown in Fig. 1B and 1C is formed such that the upper portion is larger in diameter than the bottom portion for easy handling; but the shape of the stopper is not limited in the present invention. The stopper may be formed into a cylindrical shape having the upper portion and the bottom portion of approximately the same size as the upper portion.

A depth and width of the groove 3d is suitably adjusted depending on the size of the stopper 3. A preferable embodiment of the depth and width is the following.

In the present invention, a ratio of a cross-section area of the groove of the stopper for evaporating a volatile substance to a cross-section area of the stopper is preferably 0.4 to 10%, more preferably 1.6 to 3.5%. If the ratio is less than 0.4%, a gas blown through the groove reaches the bottom of the container and blows the solution up to the upper space of the container. As a result, the solution may enter a pump. On the contrary, if the ratio exceeds 10%, a gas blown through the groove impinges only the upper portion of the sample solution and stirs only the upper portion of the solution. This may lead insufficient effect for accelerating the vaporization of the volatile substance.

When the stopper for evaporating a volatile substance according to the present invention is used to evaporate a volatile substance, it is possible to reduce pressure in an internal space of the container by using a pump, as described later.

The container of which the opening part is closed with the above described stopper serves a vessel for removing a volatile substance according to the present invention. When the opening part of the container 2 is closed with the stopper 3, a space (gas introducing channel) communicating external environment and the internal space of the container 2 is formed between the groove 3d and an inner wall of the container 2.

Vaporization of a volatile substance for the case of the vessel 1 for removing a volatile substance will be described.

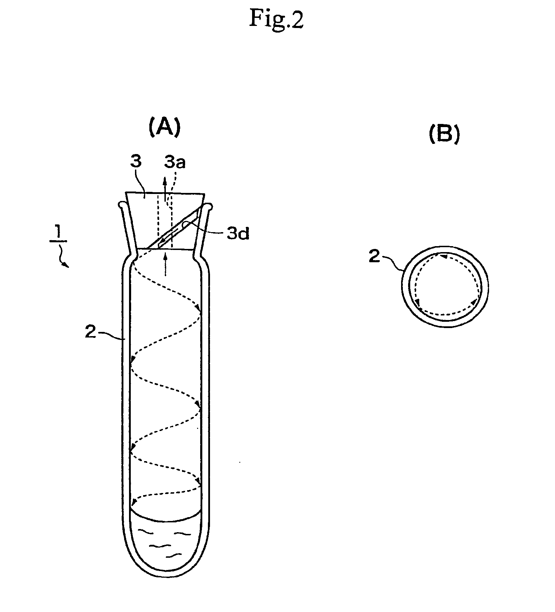

Figs.2 are drawings showing states of flow in the vessel for removing a volatile substance shown in Fig.1, Fig.2A is a side view and Fig.2B is a plane view.

When the container 2 is reduced in pressure, for example, the through-pore 3a of the stopper 3 is connected to a suction side of a pump. On driving the pump, a gas contained in the container 2 is drawn to reduce pressure in the container. After that an external gas is introduced into the container through the gas inlets port 3b. So that the introduced gas is blown into the container 2 from the gas outlet port 3c through the groove 3d (gas introducing port) at high speed. It is provable that the gas blown from the gas outlet port 3c spirally rotates by centrifugal force along the inner wall of the container 2 while impinging against the inner wall of the container 2, as shown in Fig.2. Alternatively, uneven turbulent flow may be caused, not the spirally flow. Such gas flows (spirally flow and turbulent flow) generated in the container 2 kicks up the sample solution to stir it, increasing the surface area of the solution and thus promoting vaporizing of the volatile substance. The vaporized volatile substance is discharged from the through-pore 3a of the stopper 3.

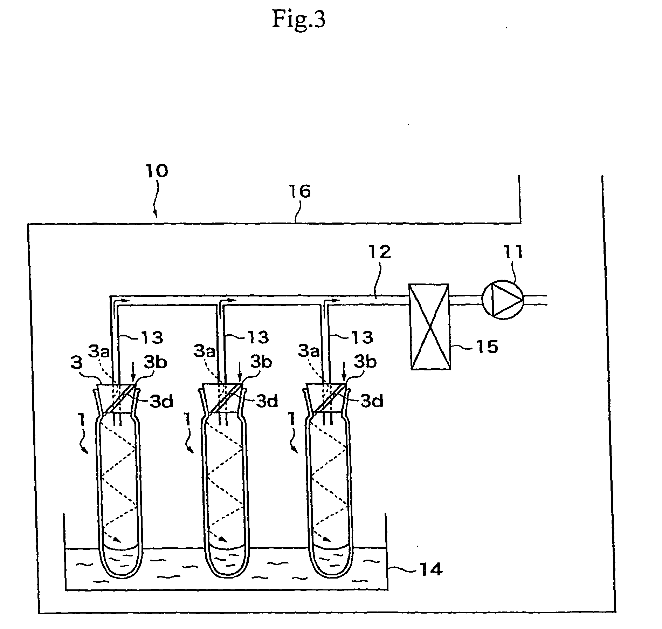

An apparatus for evaporating a volatile substance according to the present invention will be described referring to Fig.3.

Fig.3 is a drawing schematically showing a structure of an apparatus for evaporating volatile substance.

The apparatus 10 for evaporating a volatile substance comprises plural of vessel 1 for evaporating a volatile substance, which collects a sample solution, and a pump 11 for reducing pressure of the vessel 1 for evaporating a volatile substance. A suction port of the pump 11 is connected to a main line 12 which diverges into branch lines 13 each communicating with the vessel 1 for evaporating a volatile substance. Each branch line 13 is passed through the through-pore 3a of the stopper 3 of the vessel 1 for removing a volatile substance. Each vessel 1 for removing a volatile substance is supported in a water bath 14 charging room temperature water.

A trap 15 is equipped at the downstream of the pump 11.

An operation of the apparatus for evaporating a volatile substance shown in Fig.3 will be described.

On working the pump 11, air inside each vessel 1 for removing a volatile substance is drawn through each branch line 13 and the main line 12 to reduce pressure in vessel 1. This introduces an external gas from the gas inlet port 3b of the stopper 3, as described above. The gas is blown into the vessel 1 from the gas outlet port 3c through the groove 3d at high speed and the gas is spirally rotated by centrifugal force along the inner wall of the vessel or the gas is introduced turbulently. This kicks up the sample solution and stirs it. As a result, the volatile substance is vigorously vaporized. The vaporized volatile substance is discharged with blowing gas through the branch lines 13 penetrating the through-pore 3a of the stopper 3 and main line 3 and trapped by the trap 15.

In the embodiment shown in Fig.3, although each vessel 1 for evaporating a volatile substance is set in the water bath 14, it is unnecessary to set them in the water bath 14. Further, the water may be heated, although the water bath 14 is charged room temperature water in the embodiment shown in Fig.3. In a case of a hardly evaporative volatile substance, the heating of the water provides an effect for accelerating vaporization of the volatile substance. The heating temperature is typically 20 to 60°C, preferably 30 to 40°C. Heating within the ranges allows the removing of the volatile substance without decomposition of compound in the sample solution.

When sample solution is easily oxidized, a line from a source of inert gas (for example, nitrogen gas and argon gas) may be connected to the gas inlet port 3b of the stopper 3, for example. In this case, the inert gas is blown into the container 2, as with the former embodiment, to stir the sample solution with the flow of the inert gas. It is also possible to set the apparatus shown in Fig.3 under an inert gas environment and carry out the vaporization operation. In this case, the apparatus shown in Fig.3 may be set in a chamber charged with inert gas.

### [Example]

Using the apparatus for removing a volatile substance shown in Fig.2, a degree of removing a volatile substance was measured under the following condition.

A tube (capacity: 15 ml) made of Falcon (registered trade name), as the container 2, was charged with MeOH (5 ml) and then vacuumed (flow rate: 33 to 35 liter/minute) for 2 minutes by a pump (MZ-2c, manufactured by VACCUBRAND Co., Ltd.) while keeping the water temperature of the water bath 14 at 32°C. After stopping operation of the pump, an amount of MeOH residue in the tube was examined. An angle of the groove 3d of the stopper to a horizontal level was changed into 10°, 20°, 30°, 45° and 60°. The groove 3d was 1.5mm in width and depth. The stopper had a bottom surface having a diameter of 16mm and an upper surface having a diameter of 16mm. The groove 3d was 1.5mm in width and depth. In this case, a ratio of the cross section area of the groove to the cross section area of the stopper was 1.1%.

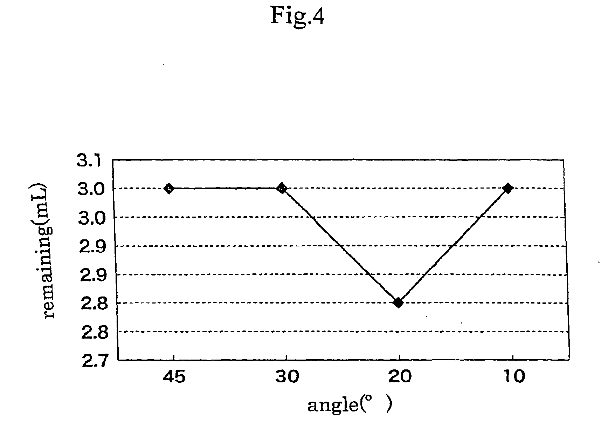

The results are shown in Table 1 and Fig.4.

**[Table 1]**

| Angle(°) | Residue amount (ml) |
|---|---|
| 45 | 3.0 |
| 30 | 3.0 |
| 20 | 2.8 |
| 10 | 3.0 |

Fig.4 is a graph showing an amount of volatile substance remaining in the tube. The ordinate axis indicates an angle θ of the groove and the abscissa axis indicates the remaining amount.

As shown in Fig.4 and Table 1, in a case in which an angle of the groove 3d is 10°, 30° and 45°, respectively, the remaining amount was 3.0 ml. In a case of the angle of 20°, the remaining amount was 2.8 ml. In a case of the angle of 60°, turbulent flow was occurred.

From the above results, it is found that use of the stopper with the groove 3d having an angle within a range of 10 to 45° vaporizes about 40 to 60% of the volatile substance.

### [Example 2]

Using the apparatus for removing a volatile substance of Fig.2, a remaining amount of the solvent is measured when a cross-section area of the stopper 3 and an outlet flow rate were changed. The spirally groove formed on the surface of the stopper 3 had a cross section of a quadrangle with defined depth and width and had an angle to a horizontal level of 20°. Measurement condition is described below.
A container of a vessel for evaporating: 15ml BD Falcon (registered trade name) tube (for centrifugation, manufactured by Becton, Dickinson and Company);
A vacuum pump: VDE0530 MD4C (manufactured by Vacuubrand);
Solvent: methanol;
Initial charge amount of solvent: 5ml;
Temperature of water bath: 32°C;
Vaporization time: 2 minutes; and
A flow meter: P-062-A1000-Lo (manufactured by TOKYO KEISO CO., LTD.).

Under the above condition, methanol charged in the vessel was vaporized. After the vaporization, a residue of methanol was measured. Outlet flow rate was adjusted by the flow meter such that a height of the solvent, which was spirally kicked up from the liquid surface, attained up to a position showing 12 ml of scale of the test tube. When a maximum flow rate did not meet 30 liter/minutes owing to limitation of the depth and width of the groove of the stopper 3, a maximum flow rate was measured when such the stopper was used. The results are shown in Table 2.

**[Table 2]**

| Sample No. | Depth (mm) | Width (mm) | Ratio of cross-section area of groove | Flow rate(L/minute) | Residue of methanol (ml) |
|---|---|---|---|---|---|
| 1 | 1 | 1 | 0.50 | 18 | 3 |
| 2 | 1 | 1.5 | 0.75 | 25 | 2.5 |
| 3 | 1 | 3 | 1.5 | 30 | 2.4 |
| 4 | 1.5 | 1.5 | 1.1 | 30 | 2.3 |
| 5 | 1.5 | 3 | 2.2 | 33 | 2.5 |
| 6 | 3 | 1 | 1.5 | 30 | 2.6 |
| 7 | 3 | 1.5 | 2.2 | 33 | 2.6 |
| 8 | 3 | 3 | 4.5 | 35 | 3 |

Comparing the sample 3 with the sample 6 and the sample 6 with the sample 7, it is clearly found that even if the ratios of a cross-section area of the groove to a cross-section area of the stopper are same, when the width is larger than the depth, the solvent can be vaporized more effectively. This shows that by flowing the blown gas along the inner wall of the test tube to provide a rotary force to the blown gas an efficient vaporization of the solvent becomes possible.

### Brief Description of the Drawings

Figs.1 are drawings showing a vessel consist of a stopper and a container for removing a volatile substance according to the present invention, Fig.1A is a front view of the vessel for evaporating a volatile substance; Fig.1B is a perspective view of the stopper for evaporating a volatile substance and Fig.1C is a front view of the stopper;
Figs.2 are drawings showing states of introduced gas flow in the test tube for evaporating a volatile substance shown in Fig.1, Fig.2A is a side view and Fig.2B is a plan view;
Fig.3 is a drawing schematically showing a structure of an apparatus for evaporating volatile substance; and
Fig.4 is a graph showing an amount of volatile substance remaining in the tube.

### Explanation of item numbers

1 vessel for evaporating a volatile substance;
2 container;
3 stopper for evaporating a volatile substance;
10 apparatus for evaporating a volatile substance;
11 main line;
13 branch line;
14 water bath; and
15 trap.

## Claims

1. A stopper (3) for removing a volatile substance, which closes an opening of a container (2) for removing a volatile substance,
wherein said stopper (3) is formed with a through-pore (3a) for exhausting air,
said stopper (3) is formed with a gas inlet port (3b) at the upper edge for introducing gas into the container and a gas outlet port (3c) at the lower edge for contacting the introduced gas with a solvent in the container (2), and **characterized in that**
said stopper (3) is formed with a groove (3d) connecting said inlet port (3b) to said outlet port (3c) at the side surface.

2. A stopper (3) for removing volatile substance according to claim 1,
wherein an angle (θ) of said groove (3d) to a horizontal level is 10 to 45°.

3. A stopper (3) for removing volatile substance according to claim 1 or 2,
wherein a ratio of a cross-section area of said groove (3d) to a cross-section area of said stopper (3) is 0.4 to 10%.

4. A stopper (3) for removing volatile substance according to any of claims 1 to 3,
wherein said groove (3d) is formed along the side surface in a spiral fashion.

5. A test tube (1) for removing a volatile substance, which is used to vaporize a volatile substance from a sample solution, comprising:
a container (2) storing the solution containing said volatile substance and
a stopper (3) according to one of claims 1 to 4.

6. An apparatus (10) for removing a volatile substance, which removes a volatile substance from a sample solution, comprising:
one or more test tubes (1) for removing a volatile substance, which store said sample solution; and
pressure-reducing means (11) for reducing pressure in said test tube (1) for a removing volatile substance,
wherein said test tube (1) for removing a volatile substance is the test tube (1) according to claim 5.

## Patentansprüche

1. Stopfen (3) zum Entfernen einer flüchtigen Substanz, der eine Öffnung eines Behälters (2) zum Entfernen einer flüchtigen Substanz verschließt,
wobei der Stopfen (3) mit einer durchgehenden Pore (3a) zum Auslassen von Luft ausgebildet ist,
der Stopfen (3) mit einer Gaseinlassöffnung (3b) am oberen Rand zum Einführen von Gas in den Behälter, und mit einer Gasauslassöffnung (3c) am unteren Rand zum Kontaktieren des eingeführten Gases mit einem Lösungsmittel in dem Behälter (2) ausgebildet ist, und **dadurch gekennzeichnet ist, dass** der Stopfen (3) an der Seitenoberfläche mit einem Kanal (3d), der die Einlassöffnung (3b) mit der Auslassöffnung (3c) verbindet, ausgebildet ist.

2. Stopfen (3) zum Entfernen von flüchtiger Substanz nach Anspruch 1,
wobei ein Winkel (θ) des Kanals (3d) zu einer horizontalen Ebene 10 bis 45° beträgt.

3. Stopfen (3) zum Entfernen von flüchtiger Substanz nach Anspruch 1 oder 2, wobei ein Verhältnis einer Querschnittsfläche des Kanals (3d) zu einer Querschnittsfläche des Stopfens (3) 0,4 bis 10% beträgt.

4. Stopfen (3) zum Entfernen von flüchtiger Substanz nach einem der Ansprüche 1 bis 3,
wobei der Kanal (3d) entlang der Seitenoberfläche spiralig ausgebildet ist.

5. Reagenzglas (1) zum Entfernen einer flüchtigen Substanz, das zum Verdampfen einer flüchtigen Substanz aus einer Probenlösung verwendet wird, aufweisend:
einen Behälter (2), in dem sich die Lösung, die die flüchtige Substanz enthält, befindet; und
einen Stopfen (3) nach einem der Ansprüche 1 bis 4.

6. Vorrichtung (10) zum Entfernen einer flüchtigen Substanz, die eine flüchtige Substanz aus einer Probenlösung entfernt, aufweisend:
ein oder mehrere Reagenzgläser (1) zum Entfernen einer flüchtigen Substanz, in denen sich die Probenlösung befindet; und
eine Druckverringerungs-Einrichtung (11) zum Verringern des Drucks in dem Reagenzglas (1) zum Entfernen einer flüchtigen Substanz,
wobei das Reagenzglas (1) zum Entfernen einer flüchtigen Substanz das Reagenzglas (1) nach Anspruch 5 ist.

## Revendications

1. Bouchon (3) pour éliminer une substance volatile, qui ferme une ouverture d'un récipient (2) pour éliminer une substance volatile,
dans lequel ledit bouchon (3) est formé avec un pore de passage (3a) pour évacuer l'air,
ledit bouchon (3) est formé avec un orifice d'entrée de gaz (3b) au niveau du bord supérieur pour introduire du gaz dans le récipient et un orifice de sortie de gaz (3c) au niveau du bord inférieur pour mettre en contact le gaz introduit avec un solvant dans le récipient (2), et **caractérisé en ce** qui :
ledit bouchon (3) est formé avec une rainure (3d) raccordant ledit orifice d'entrée (3b) audit orifice de sortie (3c) au niveau de la surface latérale.

2. Bouchon (3) pour éliminer une substance volatile selon la revendication 1,
dans lequel un angle (θ) de ladite rainure (3d) par rapport à un niveau horizontal est de 10 à 45°.

3. Bouchon (3) pour éliminer une substance volatile selon la revendication 1 ou 2,
dans lequel un rapport d'une surface transversale de ladite rainure (3d) sur une surface transversale dudit bouchon (3) est de 0,4 à 10%.

4. Bouchon (3) pour éliminer une substance volatile selon l'une quelconque des revendications 1 à 3,
dans lequel ladite rainure (3d) est formée le long de la surface latérale à la manière d'une spirale.

5. Tube à essai (1) pour éliminer une substance volatile, qui est utilisé pour vaporiser une substance volatile d'une solution d'échantillon, comprenant :
un récipient (2) stockant la solution contenant ladite substance volatile ; et
un bouchon (3) selon l'une quelconque des revendications 1 à 4.

6. Appareil (10) pour éliminer une substance volatile, qui élimine une substance volatile d'une solution d'échantillon, comprenant :
un ou plusieurs tubes à essai (1) pour éliminer une substance volatile, qui stockent ladite solution d'échantillon ; et
des moyens de réduction de pression (11) afin de réduire la pression dans ledit tube à essai (1) pour éliminer la substance volatile,
dans lequel ledit tube à essai (1) pour éliminer une substance volatile est le tube à essai (1) selon la revendication 5.
